# FASCICULE DE BREVET EUROPEEN

(11) **EP 2 191 754 B1**
(45) Date de publication et mention de la délivrance du brevet: **04.07.2012**
(21) Numéro de dépôt: 09175429.1
(22) Date de dépôt: 09.11.2009
(51) Int. Cl.: A47J 37/06

(54) **Appareil à raclette avec gorge annulaire**
Raclette-Gerät mit Ringnut
Scraper device with annular groove

(30) Priorité: 28.11.2008 FR 0858143
(43) Date de publication de la demande: 02.06.2010
(73) Titulaire: SEB SA, 69130 Ecully (FR)
(72) Inventeur: Croz, Etienne, 74330, Seynod (FR); Prieto, M. Guillaume, 74600, Seynod (FR)
(74) Mandataire: Lemoine, Jean-Sébastien

(56) Documents cités:
- WO-A-92/10126
- DE-U1- 29 922 870
- DE-U1-202007 015 249

## Description

La présente invention concerne un appareil électroménager du type appareil à raclette avec coupelles de cuisson de fromage, tel que connu du document DE 20 2007 015249U.

On connaît un appareil à raclette du type comprenant une surface de réception de coupelles de cuisson d'aliment, une résistance électrique disposée au-dessus de la surface de réception, et un capot recouvrant la surface de réception et la résistance électrique de façon à former la limite supérieure d'une chambre de cuisson pour les coupelles.

Le capot est traditionnellement utilisé soit comme grill pour la cuisson de certains aliments tels que des tranches de bacon, soit pour le maintien au chaud d'aliments tels que la pomme de terre. Cependant, le capot reçoit une telle quantité de chaleur qu'il atteint une température proche de 220 à 240°C. Aussi, très souvent, il est inadapté pour le maintien au chaud des pommes de terre ou d'autres aliments similaires.

La présente invention vise à avoir un appareil dont le capot permet de maintenir au chaud certains aliments, tout en gardant une architecture classique de l'appareil et tout en conservant la possibilité de griller d'autres aliments.

Selon l'invention, dans l'appareil à raclette du type précité, le capot comprend une gorge annulaire délimitant une zone centrale et une zone périphérique qui est conformée de façon à pouvoir recevoir des aliments.

Ainsi, la longueur du capot, selon la direction radiale, se trouve augmentée, et la gorge agit comme un frein thermique. De ce fait, alors que la zone centrale a une température proche de 220 à 240°C (adaptée pour griller des aliments), la zone périphérique n'atteint qu'une température entre 120 et 180°C, selon la profondeur de la gorge, notamment.

D'autres particularités et avantages de la présente invention apparaîtront dans les deux modes de réalisation donnés à titre d'exemples non limitatifs et illustrés par les dessins mis en annexe dans lesquels :
La figure 1 est une vue de haut, en perspective d'un appareil à raclette conforme à un premier mode de réalisation de la présente invention,
La figure 2 est une vue en coupe verticale de l'appareil de la figure 1,
La figure 3 est une vue en coupe et en perspective du capot de l'appareil à raclette des figures 1 et 2,
La figure 4 est une vue en coupe verticale d'une portion de l'appareil de la figure 1,
La figure 5 est un agrandissement de la zone périphérique visible à la figure 4, et
La figure 6 est une vue similaire à la figure 4, d'un appareil à raclette conforme à un second mode de réalisation.

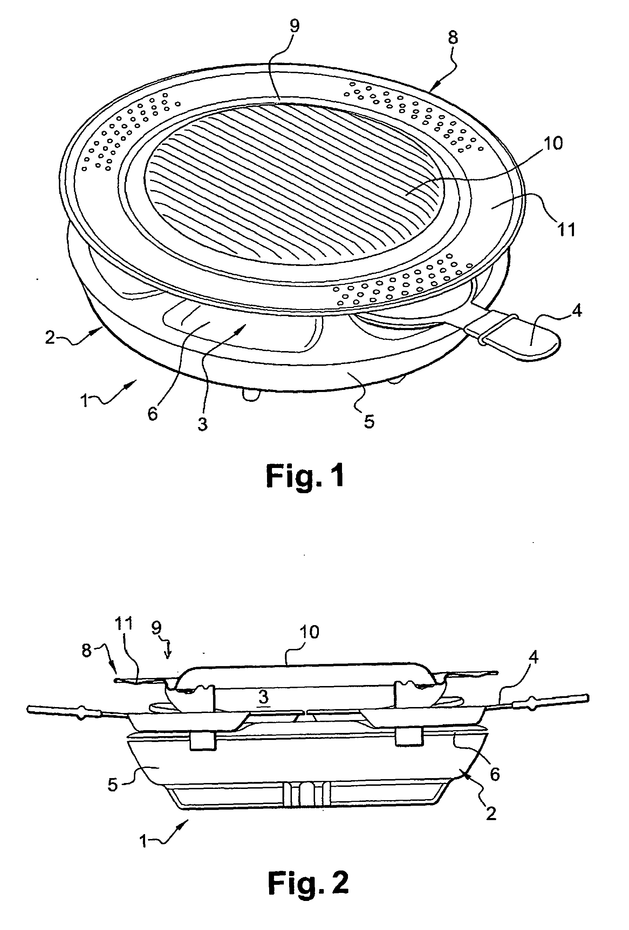

Un appareil à raclette 1, comme on peut le voir à la figure 1, comprend un corps principal de chauffe 2 délimitant une chambre de cuisson 3, et des coupelles 4 de cuisson d'aliments (tel que du fromage à fondre) adaptées à venir se loger dans la chambre de cuisson 3.

Le corps principal 2 comprend un socle 5 qui est adapté à reposer sur une surface de travail et dont la surface supérieure forme une surface de réception 6 pour les coupelles 4, une résistance électrique 7 qui est disposée au-dessus et à distance de la surface de réception 6, et un capot 8 qui recouvre la surface de réception 6 et la résistance électrique 7.

La chambre de cuisson 3 est ainsi délimitée, vers le bas, par la surface de réception 6, et, vers le haut, par le capot 8.

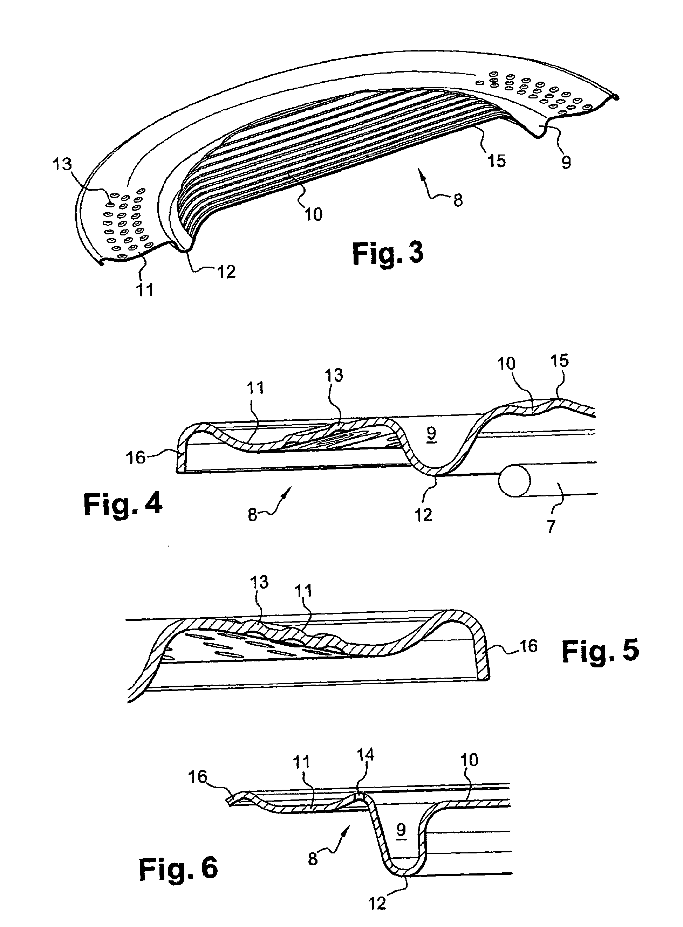

Comme on peut le voir aux figures 3 à 4 et 6, le capot 8 comprend une gorge annulaire 9 qui délimite deux zones 10, 11 l'une de l'autre : une zone centrale 10 atteignant une température comprise entre 220 à 240°C, et une zone périphérique 11 atteignant une température comprise entre 120 et 180°C. La différence de température est due à la gorge annulaire 9 qui forme un frein de température du fait de l'accroissement de la longueur radiale du capot 8 et de la faible épaisseur de ce dernier (qui, en général est une tôle emboutie). Afin d'avoir une augmentation conséquente de la longueur radiale du capot 8, de préférence, la gorge annulaire 9 a une profondeur au moins égale à 1 cm, voire 2 cm.

Cette gorge annulaire 9 présente l'avantage de renforcer la résistance mécanique du capot 8, ainsi que de servir de gorge de récupération des jus de cuisson des aliments mis à cuire sur la zone centrale 10.

Par ailleurs, afin de limiter l'impact du rayonnement thermique sur la zone périphérique 11, de préférence, quand le capot 8 est correctement positionné, le fond 12 de la gorge annulaire 9 atteint le niveau supérieur de la résistance électrique 7. Ceci permet également de limiter l'impact thermique du rayonnement aux abords de l'appareil à raclette 1, et d'augmenter la puissance de chauffe à l'intérieur de la chambre de cuisson 3.

Etant donné que la fonction principale de la zone périphérique 11 est le maintien au chaud des aliments, afin de former une surface d'appui conséquente, il est préférable qu'elle s'étende radialement sur au moins 3 cm, voire au moins 4 cm. Par ailleurs, dans les présents modes de réalisation, la zone périphérique 11 a un profil radial en creux, comme illustré aux figures 4 à 6.

Ainsi le capot 8 comprend une zone centrale 10 dont la surface est sensiblement plane (munie de nervures de cuisson 15 dans le premier mode de réalisation), bordée par la gorge annulaire 9, elle-même bordée par la zone périphérique 11 (ici, légèrement en creux). Enfin le capot 8 est radialement délimité par un rebord tombant 16 qui borde la zone périphérique 11

En outre, dans le premier mode de réalisation, de façon à limiter le contact thermique des aliments qui y reposent, la zone périphérique 11 présente avantageusement des saillies verticales 13 orientées vers le haut (ici, des picots 13).

Dans le premier mode de réalisation, le niveau de la zone périphérique 11 est plus bas que celui de la zone centrale 10, contrairement au second mode de réalisation.

Dans le second mode de réalisation, le capot 8 comprend des ouvertures 14 qui sont disposées entre la zone centrale 10 et la zone périphérique 11 (ici, autour de la gorge annulaire 9, à la liaison entre celle-ci et la zone périphérique 11 - au sommet de cette liaison). Ces ouvertures permettent d'augmenter le frein thermique.

Par ailleurs, il est possible d'augmenter l'effet de frein thermique de la gorge annulaire 9 en la remplissant d'eau. Toutefois, il est nécessaire que sa capacité soit importante (de l'ordre de 20 cl pour 10 minutes d'utilisation en cuisson, soit 1,2 l pour 1 heure d'utilisation).

La présente invention n'est pas limitée aux deux modes de réalisation décrits ci-dessus.

Il serait ainsi possible que les ouvertures soient disposées à la jonction entre la gorge annulaire et la zone centrale, ou que le capot comprenne à la jonction entre la zone centrale et la zone périphérique, non pas des ouvertures, mais une section radiale à faible épaisseur, ce qui permet également de limiter la conduction thermique.

## Revendications

1. Capot (8) d'appareil à raclette (1) comprenant une gorge annulaire (9) délimitant une zone centrale (10) et une zone périphérique (11), **caractérisé en ce que** la zone périphérique (11) est conformée de façon à pouvoir recevoir des aliments.

2. Capot (8) selon la revendication 1, **caractérisé en ce que** la gorge annulaire (9) a une profondeur au moins égale à 1 cm.

3. Capot (8) selon la revendication 1 ou 2, **caractérisé en ce que** le niveau de la zone périphérique (11) est plus bas que celui de la zone centrale (10).

4. Capot (8) selon l'une des revendications 1 à 3, **caractérisé en ce que** la zone périphérique (11) s'étend radialement sur au moins 3 cm.

5. Capot (8) selon l'une des revendications 1 à 4, **caractérisé en ce que** la zone périphérique (11) a un profil radial en creux.

6. Capot (8) selon l'une des revendications 1 à 5, **caractérisé en ce que** la zone périphérique (11) présente des saillies verticales (13) orientées vers le haut de façon à limiter le contact thermique des aliments qui y reposent.

7. Capot (8) selon la revendication 6, **caractérisé en ce que** les saillies verticales orientées sont formées par des picots (13).

8. Capot (8) selon l'une des revendications 1 à 7, **caractérisé en ce qu'**il comprend des ouvertures (14) disposées à la liaison entre la gorge annulaire (9) et la zone périphérique (11).

9. Capot (8) selon l'une des revendications 1 à 8, **caractérisé en ce qu'**il comprend une section radiale à
faible épaisseur disposée à la liaison entre la zone central (10) et la zone périphérique (11).

10. Appareil à raclette (1) comprenant une surface de réception (6) de coupelles (4), une résistance électrique (7) disposée au-dessus de la surface de réception (6), et un capot (8) recouvrant la surface de réception (6) et la résistance électrique (7) de façon à former la limite supérieure d'une chambre de cuisson (3) dans laquelle se logent les coupelles (4), **caractérisé en ce que** le capot (8) est conforme à l'une des revendications 1 à 9.

11. Appareil à raclette (1) selon la revendication 10, **caractérisé en ce que** le fond (12) de la gorge annulaire (9) du capot (8) atteint le niveau supérieur de la résistance électrique (7).

## Claims

1. Lid (8) of a raclette device (1) comprising an annular groove (9) demarcating a central zone (10) and a peripheral zone (11), **characterised in that** the peripheral zone (11) is shaped in such a way that it can hold foods.

2. Lid (8) according to claim 1, **characterised in that** the annular groove (9) has a depth which is equal to at least 1cm.

3. Lid (8) according to claim 1 or 2, **characterised in that** the level of the peripheral zone (11) is lower than the one that of the central zone (10).

4. Lid (8) according to any one of claims 1 to 3, **characterised in that** the peripheral zone (11) extends radially over at least 3cm.

5. Lid (8) according to any one of claims 1 to 4, **characterised in that** the peripheral zone (11) has a hollow radial profile.

6. Lid (8) according to any one of claims 1 to 5, **characterised in that** the peripheral zone (11) has vertical protrusions (13) directed upwards in order to limit the thermal contact of the foodstuffs which rest upon it.

7. Lid (8) according to claim 6, **characterised in that** the upward vertical protrusions are formed by pins (13).

8. Lid (8) according to any one of claims 1 to 7, **characterised in that** it comprises openings (14) arranged at the conjunction of the annular groove (9) and the peripheral zone (11).

9. Lid (8) according to any one of claims 1 to 8, **characterised in that** it comprises a thin radial section arranged at the conjunction of the central zone (10) and the peripheral zone (11).

10. Raclette device (1) comprising a receiving surface (6) for pans (4), an electrical resistor (7), arranged above the receiving surface (6), and a lid (8) covering the receiving surface (6) and the electrical resistor (7) in order to form the upper limit of a cooking chamber (3) in which the pans (4) reside, **characterised in that** the lid (8) complies with one of claims 1 to 9.

11. Raclette device (1) according to claim 10, **characterised in that** the bottom (12) of the annular groove (9) of the lid (8) reaches the upper level of the electrical resistor (7).

## Patentansprüche

1. Deckel (8) eines Raclettegeräs (1) mit einer ringförmig verlaufenden Rinne (9), die einen Zentralbereich (10) und einen Umfangsbereich (11) abgrenzt, **dadurch gekennzeichnet, dass** der Umfangsbereich (11) so ausgebildet ist, dass dieser Lebensmittel aufnehmen kann.

2. Deckel (8) nach Anspruch 1, **dadurch gekennzeichnet, dass** die ringförmig verlaufende Rinne (9) eine Tiefe von wenigstens 1 cm hat.

3. Deckel (8) nach Anspruch 1 oder 2, **dadurch gekennzeichnet, dass** das Niveau des Umfangsbereichs (11) tiefer ist als dasjenige des Zentralbereichs (10).

4. Deckel (8) nach einem der Ansprüche 1 bis 3, **dadurch gekennzeichnet, dass** sich der Umfangsbereich (11) radial über wenigstens 3 cm erstreckt.

5. Deckel (8) nach einem der Ansprüche 1 bis 4, **dadurch gekennzeichnet, dass** der Umfangsbereich (11) ein radiales Hohlprofil hat.

6. Deckel (8) nach einem der Ansprüche 1 bis 5, **dadurch gekennzeichnet, dass** der Umfangsbereich (11) vertikale Vorsprünge (13) aufweist, die nach oben gerichtet sind, um so den Wärmekontakt der Lebensmittel, die darauf liegen, zu begrenzen.

7. Deckel (8) nach Anspruch 6, **dadurch gekennzeichnet, dass** die vertikalen Vorsprünge (13) durch Noppen gebildet sind.

8. Deckel (8) nach einem der Ansprüche 1 bis 7, **dadurch gekennzeichnet, dass** dieser Öffnungen (14) umfasst, die an der Verbindung zwischen der ringförmig verlaufenden Rinne (9) und dem Umfangsbereich (11) angeordnet sind.

9. Deckel (8) nach einem der Ansprüche 1 bis 8, **dadurch gekennzeichnet, dass** dieser einen an der Verbindung zwischen dem Zentralbereich (10) und dem Umfangsbereich (11) angeordneten radialen Abschnitt mit geringer Dicke aufweist.

10. Raclettegerät (1) mit einer Aufnahmefläche (6) für Pfännchen (4), einem elektrischen Widerstand (7), der oberhalb der Aufnahmefläche (6) angeordnet ist, und einem Deckel (8), der die Aufnahmefläche (6) und den elektrischen Widerstand (7) überdeckt, um die obere Abgrenzung einer Garkammer (3) zu bilden, in welcher die Pfännchen (4) aufgenommen sind, **dadurch gekennzeichnet, dass** der Deckel (8) nach einem der Ansprüche 1 bis 9 ausgebildet ist.

11. Raclettegerät (1) nach Anspruch 10, **dadurch gekennzeichnet, dass** der Boden (10) der ringförmig verlaufenden Rinne (9) des Deckels (8) das Obere Niveau des elektrischen Widerstandes (7) erreicht.
